(19) Europäisches Patentamt
European Patent Office
Office européen des brevets

(11) **EP 3 267 226 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(51) Int Cl.:
***G01S 17/36*** *(2006.01)*    ***G01S 7/491*** *(2006.01)*

(21) Anmeldenummer: **17168993.8**

(22) Anmeldetag: **02.05.2017**

(54) **ENTFERNUNGSMESSENDER OPTOELEKTRONISCHER SENSOR UND VERFAHREN ZUR ERFASSUNG UND ABSTANDSBESTIMMUNG EINES OBJEKTS**

DISTANCE-MEASURING OPTO-ELECTRONIC SENSOR AND METHOD FOR DETECTING DETERMINING THE DISTANCE FROM OBJECTS

CAPTEUR TÉLÉMÉTRIQUE OPTOÉLECTRONIQUE ET PROCÉDÉ DE DÉTECTION ET DE DÉTERMINATION DE DISTANCES ENTRE DES OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2016 DE 102016111225**

(43) Veröffentlichungstag der Anmeldung:
**10.01.2018 Patentblatt 2018/02**

(73) Patentinhaber: **Sick AG**
**79183 Waldkirch (DE)**

(72) Erfinder:
• **Clemens, Klaus**
**79367 Weisweil (DE)**
• **Hug, Gottfried**
**79183 Waldkirch (DE)**
• **Marra, Martin**
**79280 Au (DE)**

(56) Entgegenhaltungen:
**US-A1- 2006 202 129    US-A1- 2007 182 949**
**US-A1- 2009 245 788**

• **David Su ET AL: "@BULLET 2002 IEEE International Solid-State Circuits Conference ISSCC 2002 / SESSION 5 / WIRELESS NETWORKING TRANSCEIVERS / 5.4 5.4 A 5GHz CMOS Transceiver for IEEE 802.11a Wireless LAN", , 4. Februar 2002 (2002-02-04), XP55408862, Gefunden im Internet: URL:http://ieeexplore.ieee.org/ielx5/7787/ 21411/00992954.pdf [gefunden am 2017-09-21]**
• **SHCHERBAKOVA OLGA ET AL: "Linear-Mode Gain-Modulated Avalanche Photodiode Image Sensor for Time-of-Flight Optical Ranging", IEEE TRANSACTIONS ON ELECTRON DEVICES, IEEE SERVICE CENTER, PISACATAWAY, NJ, US, vol. 63, no. 1, 1 January 2016 (2016-01-01), pages 145-152, XP011594942, ISSN: 0018-9383, DOI: 10.1109/TED.2015.2465176 [retrieved on 2015-12-24]**

**Beschreibung**

Die Erfindung betrifft einen entfernungsmessenden optoelektronischen Sensor und ein Verfahren zur Erfassung und Abstandsbestimmung eines Objekts in einem Überwachungsbereich nach dem Oberbegriff von Anspruch 1 beziehungsweise 14.

Für eine optische Entfernungsbestimmung wird oftmals die Laufzeit eines Lichtsignals gemessen, die über die Lichtgeschwindigkeit der Entfernung entspricht. Man unterscheidet herkömmlich die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Die Grenze zwischen den beiden Verfahren lässt sich aber nicht immer scharf ziehen, denn etwa bei komplexen Pulsmustern wird ein Pulslaufzeitverfahren einem Phasenverfahren ähnlicher als einer klassischen Einzelpulsmessung.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

Für die Abstandsmessung insbesondere mit einem Phasenverfahren ist erforderlich, dass die Modulationsfrequenz am Empfänger noch abbildbar bleibt. Das Empfangselement ist üblicherweise eine PIN-Diode oder eine APD (Avalanche Photo Diode, Lawinenphotodiode), und hierbei ist die maximale Bandbreite durch die parasitäre Kapazität der Diode in Verbindung mit dem Eingangswiderstand eines Tranzimpedanzverstärkers im Empfangspfad begrenzt. Da sich der Phasenfehler linear in einen Distanzfehler umrechnet, ist es wünschenswert, mit möglichst hohen Frequenzen zu arbeiten. Hier gibt es aber eine Wechselwirkung zwischen der Bandbreite und der Größe der Photodiode, die wiederum den optischen Wirkungsgrad bestimmt: Je höher die Bandbreite, umso kleiner die Photodiode, somit umso schlechter der optische Wirkungsgrad, und umgekehrt. Mit einer 1 mm$^2$ großen Photodiode lassen sich nach heutigem Stand der Technik Modulationsfrequenzen im Bereich von 100 MHz erreichen. Höhere Modulationsfrequenzen könnten nur durch extrem hohen Aufwand oder einen entsprechenden Verlust in der Empfindlichkeit erkauft werden. So müsste für eine Modulationsfrequenz im GHz-Bereich die genannte Fläche von 1 mm$^2$ um mindestens eine Größenordnung schrumpfen, und das einfallende Licht auf derart kleiner Fläche reicht in aller Regel nicht mehr für eine robuste Erfassung aus.

Die Empfindlichkeit einer Lawinenphotodiode lässt sich steigern, indem sie oberhalb der Durchbruchspannung vorgespannt und damit im sogenannten Geigermodus betrieben wird (SPAD, Single Photon Avalanche Diode). Bei einer üblichen APD löst das einfallende Licht einen kontrollierten Lawinendurchbruch (Avalanche Effect) aus, und es entsteht ein Photostrom, der zu der Lichtempfangsintensität proportional ist. Im Geigermodus dagegen genügt schon ein einziger, durch ein einzelnes Photon freigesetzter Ladungsträger, um eine unkontrollierte Lawine auszulösen, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Eine Besonderheit ist die Tatsache, dass bereits ein minimales Störereignis, wie ein Fremdlichtphoton oder Dunkelrauschen, das gleiche maximale Empfangssignal erzeugt wie ein Nutzlichtsignal.

Um das Empfangssignal einer SPAD für eine Abstandsmessung nutzen zu können, muss es ausgelesen oder abgegriffen werden. Mit herkömmlichen Herangehensweisen gelingt dies jedoch bei hochfrequenten Signalen nicht. Daher hilft auch die hohe Empfindlichkeit von SPADs zunächst nicht über den geschilderten Widerspruch zwischen Bandbreite und optischem Wirkungsgrad hinweg.

Die US 2009/0245788 A1 offenbart ein integriertes System zur optischen Kommunikation und Entfernungsbestimmung. Dabei wird zur optischen Datenkommunikation eine Pulssequenz ausgesandt und wieder empfangen, und durch Korrelation zwischen Sende- und Empfangssignal wird der Zeitversatz und damit die Lichtlaufzeit bestimmt.

Die US 2007/0182949 A1 und die US 2006/0202129 A1 sind Beispiele für SPAD-basierte Entfernungsmessung mit mehreren SPAD-Empfangselementen.

Aus der Arbeit von David Su et al.: "A 5 GHz CMOS Transceiver for IEEE 802.11a Wireless LAN", 2002 IEEE International Solid-State Circuits Conference / Sessions 5 / Wireless Networking Transceivers /5.4 ist ohne Zusammenhang mit optoelektronischen Sensoren oder der Entfernungsmessung ein Hochfrequenz-Transceiver bekannt, der für ein Modulationsverfahren der drahtlosen Datenkommunikation ausgebildet ist.

Die Arbeit von Shcherbakova, Olga, et al. "Linear-mode gain-modulated avalanche photodiode image sensor for time-of-flight optical ranging." IEEE Transactions on Electron Devices 63.1 (2016): 145-152 stellt einen Bildsensor mit einer Matrix von APDs im linearen Betrieb vor. Der Messaufbau lässt maximal eine Frequenz von 200 MHz zu, wobei abschließend die Erwartung geäußert wird, dass sich dies angesichts der intrinsischen Bandbreite von CMOS-APDs im Gigahertz-Bereich noch steigern lässt.

Es ist daher Aufgabe der Erfindung, die Abstandsmessung in einem Lichtlaufzeitverfahren zu verbessern.

Diese Aufgabe wird durch einen entfernungsmessenden optoelektronischen Sensor und ein Verfahren zur Erfassung und Abstandsbestimmung eines Objekts in einem Überwachungsbereich nach Anspruch 1 beziehungsweise 14 gelöst. Der Sensor nutzt einen Lichtempfänger mit einer Vielzahl von Lawinenphotodioden im Geigermodus (SPADs). Gemessen wird mit einem Lichtsignal, das mit einem Hochfrequenzsignal moduliert ist. Dabei sei sicherheitshalber klargestellt, dass es sich um eine Amplitudenmodulation handelt, die mit der Wellenlänge des Lichts nichts zu tun hat. Die Erfindung geht nun von dem Grundgedanken aus, einen Hochfrequenz-Transceiver mit einem Modulationsverfahren der drahtlosen Datenkommunikation zu nutzen. Der bekannte Zweck solcher Modulationsverfahren ist der Austausch einer Information durch Aufmodulieren beim Senden und Rekonstruktion durch Demodulation beim Empfangen. Dieser Aspekt ist für die Erfindung aber uninteressant oder wenigstens völlig zweitrangig. Vielmehr geht es um physikalische Eigenschaften des Hochfrequenzsignals, insbesondere dessen Phase, und somit um eine Art Zweckentfremdung, um einen Abstand zu messen, anstatt Daten auszutauschen. Die Demodulation dient dazu, die physikalische Eigenschaft weiterzuverarbeiten.

Die Erfindung hat den Vorteil, dass SPADs mit ihrer sehr hohen Empfindlichkeit eingesetzt werden. Es wurde erkannt, dass eine Bandbreitenbegrenzung durch den Signalabgriff keine physikalische Notwendigkeit ist, sondern beispielsweise durch geschickte Auswahl der Schaltung gelöst werden kann. Der Einsatz von SPADs muss also gar nicht mit einem Verzicht auf ein gutes Hochfrequenzverhalten erkauft werden, und es gibt auch sonst keine Nachteile wie beispielsweise extreme Justageanforderungen. Somit sind die eingangs geschilderten Abhängigkeiten von Bandbreite und optischem Wirkungsgrad durchbrochen. Erst das ist der Schlüssel dazu, die sehr ausgereiften Technologien der drahtlosen Datenkommunikation überhaupt in Betracht zu ziehen. Damit wiederum lässt sich dann eine sehr genaue und robuste Abstandsmessung umsetzen.

Das Hochfrequenzsignal weist bevorzugt eine Frequenz von mindestens 200 MHz, mindestens 500 MHz, mindestens 1 GHz oder mindestens 2 GHz auf. Das liegt also um Faktoren oberhalb dessen, was herkömmlich mit einer noch sinnvollen Lichtempfangsfläche umgesetzt ist. Besonders bevorzugt ist die Nutzung des 2,4-GHz-ISM-Frequenzbands (Industrial, Scientific and Medical Band), denn dafür sind zahlreiche kommerziell erhältliche Hochfrequenzbausteine ausgelegt. Prinzipiell sind auch andere Frequenzbänder, wie etwa das 5GHz-Band oder ein anderes, von künftigen Standards genutztes Frequenzband denkbar. Durch die erhebliche Erhöhung auf eine gegenüber den heute möglichen ≈100 MHz um einen Faktor 2-50 höhere Arbeitsfrequenz ist auch eine entsprechend drastische Verbesserung der Genauigkeit der Abstandsmessung möglich.

Die Steuer- und Auswertungseinheit ist bevorzugt dafür ausgebildet, Empfangssignale mehrerer Lawinenphotodiodenelemente und/oder Empfangssignale zu verschiedenen Zeiten statistisch auszuwerten. Wie einleitend schon angesprochen, kann in einer Lawinenphotodiode im Geigermodus auch ein schwaches Störereignis durch Fremdlicht, optisches Übersprechen oder Dunkelrauschen den Lawinendurchbruch auslösen. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt solange für weitere Messungen aus. Deshalb kann es sinnvoll sein, Ereignisse von mehreren SPADs über Ort und/oder Zeit zu sammeln und gemeinsam statistisch zu bewerten.

Die Steuer- und Auswertungseinheit ist bevorzugt dafür ausgebildet, den Abstand in einem Phasenverfahren zu bestimmen, bei dem das Lichtsignal kontinuierlich ausgesandt und das Empfangssignal unter Erhaltung der Phase demoduliert wird. Eine Phasenmessung ist kontinuierlich (CW, Continuous Wave) in dem Sinne, dass das Signal nicht nur als kurzer Puls ausgesandt wird. Zwischen zwei Messungen kann es durchaus eine signalfreie Pause geben. Ein Phasenverfahren profitiert besonders von der Möglichkeit, mit einem Hochfrequenzsignal zu modulieren, weil die Phasenlage mit viel höherer Genauigkeit bestimmt werden kann.

Die Steuer- und Auswertungseinheit ist bevorzugt dafür ausgebildet, den Abstand sequentiell mit mehreren verschiedenen Hochfrequenzen zu messen. Ein Nachteil des Phasenverfahrens ist der geringe Eindeutigkeitsbereich von nur einer Wellenlänge des Hochfrequenzsignals. Das Eindeutigkeitsproblem wird somit durch höhere Arbeitsfrequenz noch verschärft. Eine Messwiederholung mit zwei oder drei, notfalls bei sehr großen Reichweiten auch noch mehr verschiedenen Frequenzen löst aber derartige Mehrdeutigkeiten auf.

Der Hochfrequenz-Transceiver mischt bevorzugt ein Signal in einem Basisband in die Hochfrequenz herauf und das Empfangssignal in das Basisband herab. Das Basisband liegt beispielsweise bei 10 MHz oder einer anderen, in der Steuer- und Auswertungseinheit ohne Weiteres verarbeitbaren Frequenz. Mit Hilfe des Hochfrequenz-Transceivers wird aber die Phasenlage in der wesentlich höheren Hochfrequenz gemessen. Dabei sollte insbesondere das Modulationsverfahren, vor allem die Demodulation phasenerhaltend sein.

Das Modulationsverfahren nutzt vorzugsweise eine Quadraturamplitudenmodulation (QAM). Dieses Modulationsverfahren ist robust, gut bekannt und erfüllt alle Anforderungen für eine Abstandsmessung. Insbesondere bleibt die Phase beim Demodulieren erhalten. Eine Ergänzung durch eine andere Modulation ist denkbar, jedoch für eine Abstandsmessung eigentlich nicht erforderlich.

Der Hochfrequenz-Transceiver ist vorzugsweise ein WLAN- oder ein Mobilfunk-Transceiver. Für diese Formen der drahtlosen Datenkommunikation sind umfassende Erkenntnisse zu den Modulationsverfahren und auch fertige, hochintegrierte und daher kompakte Standardkomponenten kostengünstig verfügbar. Der Hochfrequenz-Transceiver kann zwar eigens für einen optischen Sensor entworfen und entwickelt sein, in einer besonders vorteilhaften Ausführungsform ist dies aber keineswegs der Fall. Derartige Bausteine sind extrem kostengünstig und frei erhältlich. Das ermöglicht geringe Herstellkosten, kurze Entwicklungszyklen sowie ohne größere auf optoelektronische Sensoren bezogene Entwicklungsaktivität den automatischen Anschluss an die stetigen Verbesserungen in der drahtlosen Kommunikationstechnik. Wegen der extrem niedrigen Leistungsaufnahme der für tragbare Geräte optimierten Transceiver-Bausteine kommt der Sensor auch mit Anwendungen unter geringer Versorgung oder gegebenenfalls sogar mit einer Batterie aus. Dabei sind geltende und künftige WLAN-Standards denkbar. Ähnlich ist mit Mobilfunk ein geltender Standard gemeint, wie UMTS oder LTE, ebenso aber auch deren Nachfolger oder alles, was sich unter dem allgemeineren Begriff SDR (Software Defined Radio) ordnen lässt. Teilweise sind Modifikationen notwendig, beispielsweise um einen Vollduplex-Betrieb zu ermöglichen.

Der Hochfrequenz-Transceiver ist vorzugsweise Teil mindestens eines integrierten Bausteins für die drahtlose Kommunikation, insbesondere eines Digitalbausteins oder eines Mixed-Signal-Bausteins. Hierbei wird also nicht nur auf den Hochfrequenz-Transceiver aus der Datenkommunikations-Technologie zurückgegriffen, um Abstände hochgenau optisch zu messen, sondern es werden integrierte Standardkomponenten eingesetzt, die auch weitere Aufgaben direkt lösen. Denn kommerzielle Transceiver-Bausteine bieten über die Basisfunktion der Modulationsverfahren hinaus eine Fülle von zusätzlichen Funktionen, die auch in einem optoelektronischen Sensor vorteilhaft nutzbar sind.

Der Hochfrequenz-Transceiver ist vorzugsweise ein modifizierter WLAN-Baustein, der zum gleichzeitigen Senden des Lichtsignals und Erfassen von Empfangslicht vollduplexfähig ist. Ein üblicher WLAN-Baustein arbeitet halbduplex. Bei einer Phasenmessung wird das Signal jedoch üblicherweise noch gesendet, während gleichzeitig Empfangslicht registriert wird. Dafür wird ein Vollduplex-Verfahren implementiert. Das ist folglich nur so lange notwendig, wie WLAN nicht ohnehin Vollduplex ermöglicht, danach kann ein WLAN-Baustein ohne diese Modifikation verwendet werden.

Alternativ ist der Hochfrequenz-Transceiver ein Mobilfunkbaustein, dessen Sende- und Empfangsfrequenz im Abstandsmessbetrieb auf eine gleiche Frequenz gesetzt ist. LTE beispielsweise kann gleichzeitig Senden und in einer anderen Frequenz empfangen (FDD, Frequency Division Duplex). Unter Missachtung der eigentlichen Funktion können die beiden Frequenzen auf eine gleiche Frequenz gesetzt und damit ein Phasenverfahren umgesetzt werden. Dazu ist dann gar keine Hardwareänderung erforderlich.

Der Hochfrequenz-Transceiver weist bevorzugt einen Referenzkanal auf, um eine Abweichung der Phasenlage zu bestimmen. Damit können Driften durch diverse Effekte wie Alterung, Verschmutzung oder Temperatur kompensiert werden. Im vorigen Absatz war der Fall angesprochen, dass sende- und empfangsseitig eine gleiche Frequenz genutzt wird. Das schließt aber noch nicht aus, dass durch die Erzeugung dieser Frequenz insbesondere in zwei Synthesizern praktisch ein unerwünschter Phasenversatz in Sende- und Empfangskanal entsteht, und auch das ist mittels Referenzkanal kompensierbar.

In dem Hochfrequenz-Transceiver ist vorzugsweise eine Koexistenzstrategie implementiert, mit der ein Lichtsignal und ein Sensor einander eindeutig zugeordnet werden. Das ist nützlich, wenn mehrere Sensoren in räumlicher Nähe arbeiten und sich nicht gegenseitig stören sollen. Bei der drahtlosen Datenkommunikation entsteht dieses Problem ständig, so dass ein Transceiver-Baustein bereits Lösungen dafür mitbringt, und zwar vorzugsweise ohne jegliche Mehrkosten. Beispiele dafür sind Frequenzwechsel, codierende Modulation oder Frequenzspreizung (FHSS, Frequency Hopping Spread Spectrum, DSSS, Direct Sequence Spread Spectrum). Alternativ können entsprechende Verfahren in der Steuer- und Auswerteeinheit implementiert werden.

Der Sensor weist bevorzugt eine Signalabgriffschaltung zum Auslesen der Lawinenphotodiodenelemente auf, wobei die Signalabgriffschaltung ein aktives Kopplungselement mit einem Eingang, der mit einem Lawinenphotodiodenelement verbunden ist, und mit einem Ausgang aufweist, wobei das Kopplungselement einen Geigerstrom des Lawinenphotodiodenelements am Eingang auf einen in Verlauf und Pegel dem Geigerstrom entsprechenden Messstrom abbildet, indem der Eingang für den Geigerstrom einen virtuellen Kurzschluss gegen ein Potential bildet und der Ausgang von dem Eingang entkoppelt ist. Diese Signalabgriffschaltung ist ein Beispiel für eine Möglichkeit, SPADs breitbandig zu betreiben und daher mit einem Hochfrequenzverfahren der drahtlosen Kommunikation kombinierbar zu machen.

Die Lawinenphotodiodenelemente im Geiger-Modus oder SPADs wirken praktisch wie hoch lichtempfindliche Schalter, die durch Lichteinfall einen Geigerstrom auslösen. Herkömmliche Formen des Signalabgriffs sind aufgrund unzureichend optimierter Schaltungen nicht in der Lage, die sehr schnellen Abläufe bei einem Lawinendurchbruch im Messsignal widerzuspiegeln. Deshalb ist in dieser Ausführungsform das aktive Kopplungselement vorgesehen, d. h. nicht nur passive Elemente wie einen Widerstand oder Transformator. Das Kopplungselement bietet für den Geigerstrom an seinem Eingang einen virtuellen Kurzschluss gegen ein vorzugsweise festes Potential. Praktisch wird dies nur bis auf wenige Ohm oder Bruchteile von einem Ohm gelingen. Es bedeutet aber, dass der Geigerstrom nahezu vollständig aus dem Detektor, also dem jeweils auslösenden Lawinenphotodiodenelement, in die Signalabgriffschaltung fließt und über den Kurzschluss abfließen kann, ganz anders als beispielsweise bei einem einfachen Messwiderstand. Deshalb kann die durch die Vielzahl der SPAD Zellen am Ausgang gebildete parasitäre Kapazität nicht mehr wie ein Tiefpass wirken. Es finden quasi keine Umladevorgänge in den parasitären Kapazitäten mehr statt. Die schnellen hochfrequenten Geigerströme können im Wesentlichen ungehindert zum verstärkenden Element abfließen. Weiter erzeugt das Kopplungselement an seinem Ausgang aktiv einen Messstrom, der dem Geigerstrom entspricht und damit insbesondere den gleichen zeitlichen Verlauf zeigt. Das Kopplungselement kann außerdem durch eine Verstärkung dafür sorgen, dass der Messstrom einen für die weitere Verarbeitung geeigneten Pegel aufweist. Zugleich wird der Messstrom durch das Kopplungselement nahezu vollständig von dem Geigerstrom entkoppelt. Die weitere Verarbeitung des Messstroms wirkt daher nicht auf den Geigerstrom zurück. Der Verlauf des Messstroms weicht erst für Änderungen im höheren Gigahertzbereich, insbesondere oberhalb zwei oder drei GHz, durch frequenzbedingte Verluste erheblich von dem Geigerstrom ab.

Die Lawinenphotodiodenelemente weisen bevorzugt eine erste Elektrode und eine zweite Elektrode auf, über die sie vorgespannt sind, und jeweils zwischen Lawinenphotodiodenelement und erster Elektrode oder zweiter Elektrode ist eine Ladeeinheit angeordnet. Über die erste und zweite Elektrode wird die Bias- oder Vorspannung bereitgestellt, aus der sich der Lawinendurchbruch speist. Die Ladeeinheit ist häufig ein Ladewiderstand, kann aber auch eine Stromquelle sein, und bestimmt den Aufladevorgang nach einem Lawinendurchbruch.

Vorzugsweise ist der Eingang des Kopplungselements mit einer dritten Elektrode des Lawinenphotodiodenelements verbunden, und der Geigerstrom wird über die dritte Elektrode kapazitiv ausgekoppelt. Durch diese von der Bereitstellung der Vorspannung unabhängige dritte Elektrode ist ein schnelleres Auslesen möglich. Die dritte Elektrode ist vorzugsweise zwischen dem Lawinenphotodiodenelement und der Ladeeinheit angeschlossen. Allerdings sind nachteilige Effekte der Schaltkreise zum Vorspannen auf das Auslesen durch das Kopplungselement ohnehin unterdrückt. Insofern ist ein schnelles Auslesen weitgehend unabhängig von der dritten Elektrode, die also alternativ nicht vorgesehen oder nicht genutzt sein kann. Die Signalabgriffschaltung ist dann mit der ersten Elektrode oder der zweiten Elektrode verbunden und dafür die Ladeeinheit mittels eines Kondensators wechselstrommäßig überbrückt

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine sehr vereinfachte schematische Darstellung eines entfernungsmessenden optoelektronischen Sensors mit einem SPAD-Empfänger;
Fig. 2    ein Blockdiagramm eines Messkerns für einen entfernungsmessenden Sensor;
Fig. 3    ein Blockdiagramm einer weiteren Ausführungsform eines Messkerns für einen entfernungsmessenden Sensor;
Fig. 4    eine Darstellung einer hochfrequenztauglichen Signalabgriffschaltung für einen SPAD-Empfänger; und
Fig. 5    ein Vergleich des Frequenzgangs bei herkömmlichem Signalabgriff mit der Signalabgriffschaltung gemäß Figur 4.

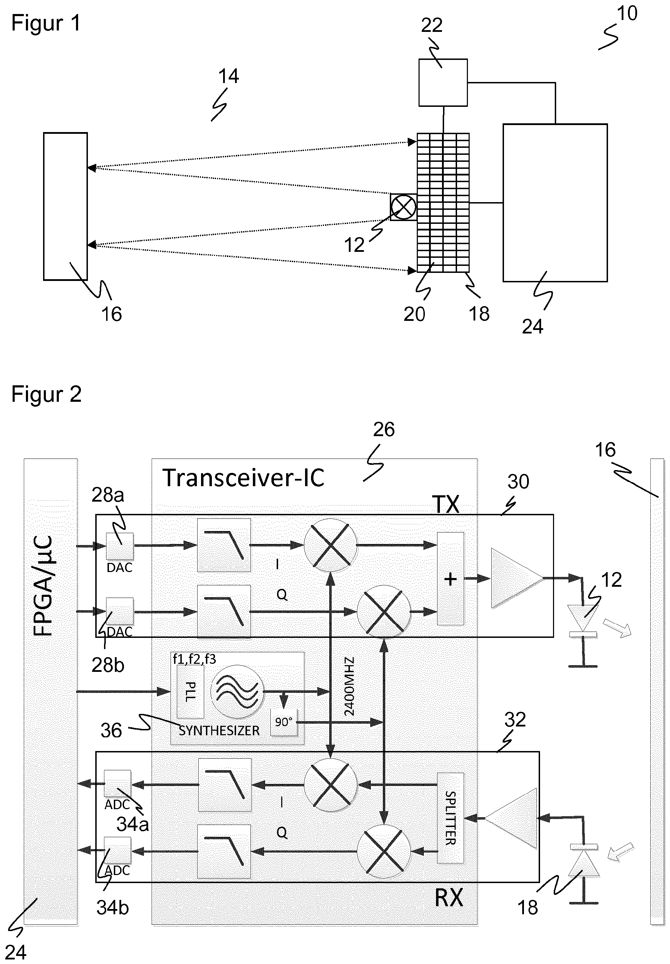

Figur 1 zeigt eine sehr vereinfachte schematische Blockdarstellung eines optoelektronischen Sensors 10 in einer Ausführungsform als einstrahliger Lichttaster. Ein Lichtsender 12, beispielsweise eine LED oder eine Laserlichtquelle, sendet ein Lichtsignal in einen Überwachungsbereich 14 aus. Trifft es dort auf ein Objekt 16, so wird ein Teil des Lichtsignals remittiert oder reflektiert und kehrt zu einem Lichtempfänger 18 zurück. Dieser Lichtempfänger 18 weist eine Vielzahl von Lichtempfangselementen auf, die als Lawinenphotodiodenelemente 20 im Geigermodus oder SPADs ausgebildet sind. Die Lawinenphotodiodenelemente 20 sind beispielsweise zu einer Matrix, einer Linie oder auch in einem anderen Muster oder irregulär angeordnet. Die Empfangssignale der Lawinenphotodiodenelemente 20 werden über eine Signalabgriffschaltung 22 von einer Steuer- und Auswertungseinheit 24 ausgelesen und dort ausgewertet. Umgekehrt kann auch die Steuer- und Auswertungseinheit 24 auf Lichtsender 12 und/oder Lichtempfänger 18 einwirken, etwa um das Lichtsignal auszulösen oder dessen Eigenschaften festzulegen, oder um Eigenschaften des Lichtempfängers 18 einzustellen.

Die Auftrennung in Lichtempfänger 18, Steuer- und Auswertungseinheit 24 und Einstelleinheit 24 in Figur 1 ist so auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodiodenelemente 20 und einzelnen oder Gruppen von Lawinenphotodiodenelementen 20 zugeordnete Schaltkreise zu deren Auswertung und Ansteuerung teilen. Die optische Anordnung mit einem Lichtsender 12, der einen kleinen Anteil des Lichtempfängers 18 verdeckt, ist rein beispielhaft. Alternativ sind auch andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Um den Abstand des Objekts 16 zu messen, bestimmt die Steuer- und Auswertungseinheit 24 eine Lichtlaufzeit von Aussenden eines Lichtsignals bis zu dessen Empfang und rechnet dies über die Lichtgeschwindigkeit in einen Abstand um. Das ist prinzipiell mit einem Puls- oder Pulsmittelungsverfahren möglich, wird aber konkret unten am Beispiel eines Phasenverfahrens beschrieben. Mehrere Sensoren 10 können kombiniert werden, um ein tastendes Lichtgitter mit mehreren, meist parallelen Strahlen zu bilden, welches in jedem Strahl Entfernungen misst oder überwacht. Auch mobile Systeme sind denkbar, bei denen der Sensor 10 beweglich montiert ist. Außerdem kann der Sensor 10 auch als Laserscanner mit einer beweglichen Ablenkeinheit zur Abtastung des Überwachungsbereichs 14 ausgebildet sein.

Figur 2 zeigt ein Blockdiagramm einer Ausführungsform eines Messkerns für den Sensor 10. Gegenüber der sehr vereinfachten Darstellung der Figur 1 ist in erster Linie ein Hochfrequenz-Transceiver 26 hinzugekommen, der einerseits mit der Steuer- und Auswertungseinheit 24 und andererseits mit Lichtsender 12 und Lichtempfänger 18 verbunden ist. Der Hochfrequenz-Transceiver 26 ist in anderem Zusammenhang, nämlich der Datenübertragung wie beispielsweise WLAN oder LTE, an sich bekannt und in hochentwickelter Form verfügbar, wird aber hier zur optischen Distanzmessung genutzt. Für die Datenübertragung wird eine Trägerfrequenz im Bereich von 2 GHz eingesetzt und in diesem Beispiel mit Quadraturamplitudenmodulation auch der Phasenraum zur Codierung der digitalen Daten verwendet.

Die eigentliche Funktion des Hochfrequenz-Transceivers 26 ist, dass an den DACs 28a-b Daten eingegeben werden, die dann über eine IQ-Modulationsstufe 30 als Hochfrequenzsignal ausgesandt werden. Umgekehrt wird ein Empfangssignal in einer IQ-Demodulationsstufe 32 aus dem Hochfrequenzsignal rekonstruiert und über ADCs 34a-b ausgegeben. Im den Sensor 10 wird das Hochfrequenzsignal jedoch nicht seiner Zweckbestimmung nach über Antennen ausgesandt und empfangen, sondern auf das Lichtsignal des Lichtsenders 12 aufmoduliert beziehungsweise das Empfangssignal des Lichtempfängers 18 demoduliert. Weiterhin ist der Hochfrequenz-Transceiver 26 dafür gedacht, Kommunikationsdaten zu senden und zu empfangen. Das wird in dem Sensor 10 aber zumindest für die Abstandsmessung gar nicht benötigt, die wesentliche Messinformation ist in dem Hochfrequenzsignal selbst enthalten. Umgekehrt ist ein Hochfrequenz-Transceiver 26 in der üblichen Datenkommunikation in der Lage, die Phase zu bestimmen, um Auswirkungen des Dopplereffekts durch eine Relativbewegung auf die in der Modulation codierten Daten herauszurechnen (MTI, Moving target indication), während diese Phase in dem Sensor in einer weiteren Zweckentfremdung die eigentliche Messgröße wird.

Unabhängig von der Zweckbestimmung ist das bekannte Modulationsverfahren mit dem Hochfrequenz-Transceiver 26 in der Lage, die Phase hochgenau zu messen. Diese Information über die Phasenverschiebung zwischen Sendesignal und Empfangssignal nutzt der Sensor 10 als Messgröße.

Etwas konkreter wird dazu in einer Ausführungsform eine Basisbandfrequenz von beispielsweise 10 MHz mit einem Hochfrequenzsignal eines Synthesizers 36 hochgemischt und ausgesendet. Das Empfangssignal wird mit dem gleichen Hochfrequenzsignal wieder heruntergemischt und ergibt nach Mischung und Tiefpass wieder die Basisbandfrequenz. Die Phasenlage zwischen dem gesendeten Basisbandsignal und dem empfangenen Basisbandsignal enthält die gesuchte Information über die Laufzeit.

In einer vorteilhaften Weiterbildung wird der Synthesizer 36 nacheinander auf mehrere, beispielsweise drei verschiedene Frequenzen f1, f2, f3 gesetzt und mehrfach gemessen. Dadurch kann der Eindeutigkeitsbereich gegenüber der Wellenlänge der einzelnen Frequenzen um ein Vielfaches erweitert werden. Die drei Frequenzen können deutlich variieren, solange man die Einschwingzeiten des Synthesizers 36 berücksichtigt. Die Phasenlage ist sehr einfach auswertbar, und die Sendestufe darf dabei auch stark verzerren, beispielsweise im C-Betrieb arbeiten. Sie wird immer nur einem Sinussignal angesteuert, und deshalb bilden sich Verzerrungen nur als Oberwellen, die in einem deutlich höheren Frequenzband liegen und sich somit empfangsseitig sehr leicht wieder durch Filter unterdrücken lassen. Dieser C-Betrieb hat den großen Vorteil, dass der Wirkungsgrad höher ist als bei dem verzerrungsarmen A-Betrieb. Damit wird weniger durchschnittliche Laserleistung benötigt, um empfangsseitig ein vergleichbares Signal / Rausch-Verhältnis zu erzielen. Beim C-Betrieb konzentriert sich die Laserleistung im kurzen Zeitabschnitt während des Maximums des Sinussignals. Für den Rest der Periode bleibt der Laser aus. Dies reduziert deutlich die benötigte mittlere Laserleistung.

Das Demodulationsverfahren hat die Eigenschaft, dass die Phasenlage des Hochfrequenzsignals auf die Basisbandfrequenz übertragen werden kann. Die IQ-Modulationsstufe 30 hat den Vorteil, dass das zweite Seitenband für eine eindeutige Messung unterdrückt ist. Ebenfalls wird dann auch der Träger unterdrückt, und es ist eine effizientere Sendeleistungsausnutzung gegeben. Die empfangsseitige IQ- Demodulationsstufe 32 ermöglicht eine eindeutige Erkennung der Phasenlage.

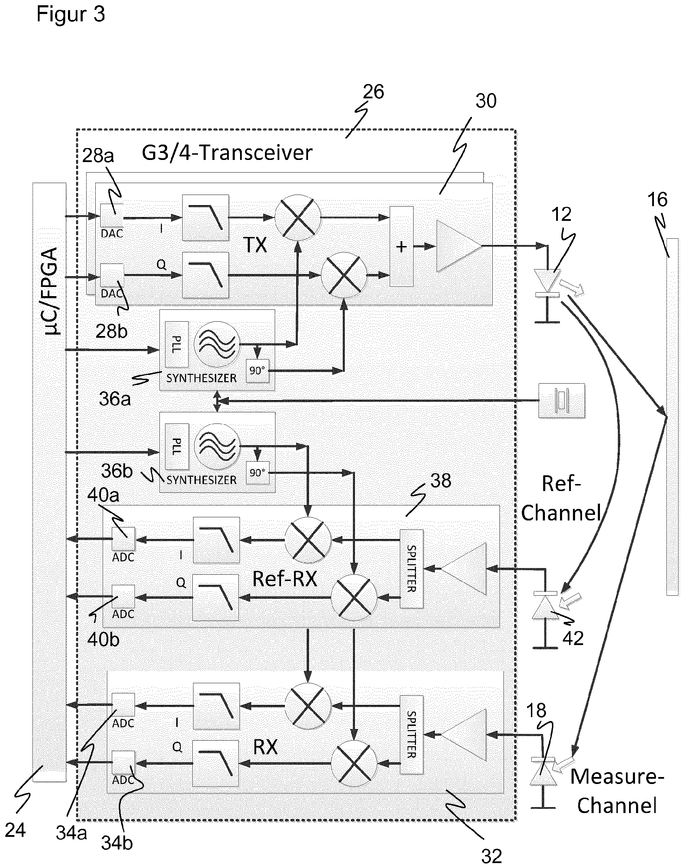

Bevor unter Bezugnahme auf Figur 3 eine weitere Ausführungsform erläutert wird, soll nun als Einschub das IQ-Mischverfahren beziehungsweise die Quadraturamplitudenmodulation kurz erläutert werden. Dieses Modulationsverfahren bietet eine Möglichkeit, bei einer Demodulation eines hochfrequenten Trägersignals die Phaseninformation zu erhalten. Der eigentliche Zweck ist, bewegte von nicht bewegten Objekten zu unterscheiden, was wiederum erforderlich ist, um den Einfluss des Dopplereffekts auf die codierten Daten zu kompensieren. Dies wird jedoch erfindungsgemäß für eine Abstandsmessung genutzt.

Aus den Basisbandsignalen $I(t)$ und $Q(t)$ bestimmt sich das Sendesignal $s(t)$ in der IQ-Modulationsstufe 30 zu

$$s(t) = I(t)\cos(\omega t) - Q(t)\sin(\omega t) = I(t)cos(\omega t) + Q(t)cos(\frac{\pi}{2} + \omega t).$$

Unter der Voraussetzung identisch zum Sender eingestellter Phasenlage ergibt sich bei der Demodulation

$$I_r(t) = s(t)\cos(\omega t) = I(t)\cos(\omega t)\cos(\omega t) - Q(t)\sin(\omega t)\cos(\omega t)$$

$$= \frac{1}{2}I(t)[1 + \cos(2\omega t)] - \frac{1}{2}Q(t)\sin(2\omega t)$$

$$= \frac{1}{2}I(t) + \frac{1}{2}[I(t)\cos(2\omega t) - Q(t)\sin(2\omega t)]$$

und entsprechend

$$Q_r(t) = s(t)(-\sin(\omega t)) = -I(t)\cos(\omega t)\sin(\omega t) + Q(t)\sin(\omega t)\sin(\omega t)$$

$$= -\frac{1}{2}I(t)\sin(2\omega t) + \frac{1}{2}Q(t)[1 - \cos(2\omega t)]$$

$$= \frac{1}{2}Q(t) - \frac{1}{2}[I(t)\sin(2\omega t) + Q(t)\cos(2\omega t)].$$

Es entstehen außer den gewünschten Basisbandsignalen $I(t)$ und $Q(t)$ Mischprodukte, die durch anschließende Tiefpassfilterung entfernt werden. Der konstante Faktor 1/2 ist beispielsweise durch Verstärkung kompensierbar. Das Signal wird in zwei Wege aufgeteilt, auf denen die Demodulation mit der ursprünglichen und der dazu orthogonalen Phasenlage erfolgt (I, in phase, und Q, Quadrature).

Bei der Datenkommunikation interessiert man sich nun für die absolute Größe des Signals $A = \sqrt{I^2 + Q^2}$. Für die hier betrachtete Abstandsmessung dagegen wird der Phasenwinkel $\varphi$ gesucht, der bei der Datenkommunikation allenfalls eine Hilfsgröße ist, nämlich $\varphi = arctan\frac{Q}{I}$.

Figur 3 zeigt ein Blockdiagramm einer weiteren Ausführungsform eines Messkerns für den Sensor 10. Prinzipiell ist der Messkern nach Figur 2 ausreichend. In dieser Form ist ein Hochfrequenz-Transceiver 26 aber nicht unbedingt kommerziell erhältlich. Ein WLAN-Baustein beispielsweise ist im Prinzip so aufgebaut. Allerdings arbeitet WLAN in einem Halbduplex-Betrieb. Das ist für eine Entfernungsmessung zumindest bei einem Phasenverfahren nicht verwendbar, weil das Lichtsignal noch gesendet wird, während Empfangslicht registriert wird. Benötigt wird also Vollduplex. Nun kann man einen WLAN-Baustein entsprechend modifizieren. Weiterhin ist auch denkbar, nur das Modulationsverfahren der Datenkommunikation zu nutzen, nicht jedoch auch die Hardware, also einen kommerziell erhältlichen integrierten Hochfrequenz-Transceiver 26. Stattdessen wird in diesem Fall die entsprechende Schaltung gleichen Funktionsumfangs auf einer Leiterplatte abgebildet und dann sogar maßgeschneidert umgesetzt. Prinzipiell kann natürlich auch eine eigene integrierte Schaltung hergestellt werden.

Es ist aber auch möglich, vollduplexfähige Standardschaltungen oder -bausteine zu verwenden. Das ist beispielsweise von LTE bekannt, und Figur 3 zeigt ein Beispiel. Im konkreten Design können solche Bausteine voneinander stark abweichen, etwa indem mehrere Treiber- und Empfängerstufen mit einer gemeinsamen Sende- und Empfangsstufe arbeiten oder indem sie vollständig parallel designt sind. Ohnehin ist LTE hier nur stellvertretend für einen drahtlosen Datenaustauschstandard zu verstehen, andere derartige Standards einschließlich zukünftiger Nachfolger sind ebenfalls denkbar. Ein allgemeinerer Begriff für derartige voll integrierte RF-Transceiver ist SDD (software defined radio). Ein solcher Baustein hat beispielsweise eine Bandbreite von 70 MHz - 6 GHz. Für die Erfindung kommt es nicht auf das konkrete Design, sondern auf die Umsetzung eines Modulationsverfahrens nach einem Datenaustauschstandard an, das sich ohne Änderung oder je nach Ausführungsform auch mit einigen gezielten Modifikationen für eine hoch präzise Abstandsmessung verwenden lässt.

Anders als in der Ausführungsform nach Figur 2 umfasst hier der Hochfrequenz-Transceiver 26 zwei Synthesizer 36a-b für Sende- und Empfangskanal. Das dient dazu, im Vollduplexbetrieb mit unterschiedlichen Frequenzen im Sende- und Empfangskanal zu arbeiten (FDD, Frequency Division Duplex). Für eine Abstandsmessung ist ein künstlicher Frequenzunterschied beim Senden und Empfangen möglicherweise kompensierbar, aber vorzugsweise werden beide Synthesizer 36a-b auf dieselbe Frequenz eingestellt. Diese Trennung kann zu einem Phasenversatz zwischen Sende- und Empfangskanal nach Einschalten führen. Zusätzlich können sich die Phasenrauschterme durch die beiden Synthesizer 36a-b erhöhen. Für die Datenübertragung werden diese Eigenschaften bei der Nutzung unterschiedlicher Schaltkreise für die Synthesizer 36a-b als unumgänglich hingenommen.

Für eine Abstandsmessung gibt es prinzipiell die Möglichkeit, den Hochfrequenz-Transceiver 26 zu modifizieren, so dass anstelle der beiden Synthesizer 36a-b nur ein gemeinsamer Synthesizer verwendet wird. Das verhindert aber die unmittelbare Nutzung eines Standardbausteins. Figur 3 zeigt eine Alternative, in der ein Referenzkanal genutzt wird. Die entsprechenden Schaltkreise sind auf geeigneten, verfügbaren LTE-Transceivern prinzipiell schon vorhanden, auch wenn sie natürlich nicht genutzt werden, um eine einheitliche Frequenz und Phase im Sende- und Empfangskanal zu erreichen.

Der Referenzkanal umfasst eine weitere Referenz-IQ-Demodulationsstufe 38 mit zugehörigen ADCs 40a-b, um die Referenzinformationen auszulesen. In der Darstellung von Figur 3 handelt es sich um einen optischen Referenzkanal mit einem Referenzlichtempfänger 42. Dabei kann es sich um einen zu dem Lichtempfänger 18 baugleichen SPAD-Lichtempfänger handeln, um einen Teilbereich auf demselben Lichtempfänger 18 oder auch um einen wesentlich einfacheren Lichtempfänger wie eine Photodiode, da der Referenzkanal kontrolliert ist und deshalb wesentlich weniger Ansprüche etwa im Hinblick auf Dynamik stellt. Alternativ ist auch eine elektronische Referenzstrecke denkbar. Über den Referenzkanal kompensiert die Steuer- und Auswerteeinheit 24 Störeinflüsse auf die eigentliche Abstandsmessung, insbesondere eine initiale Phasenlage, sonstige Abweichungen zwischen den beiden Synthesizern 36a-b und andere Driften wie beispielsweise einen Temperaturgang.

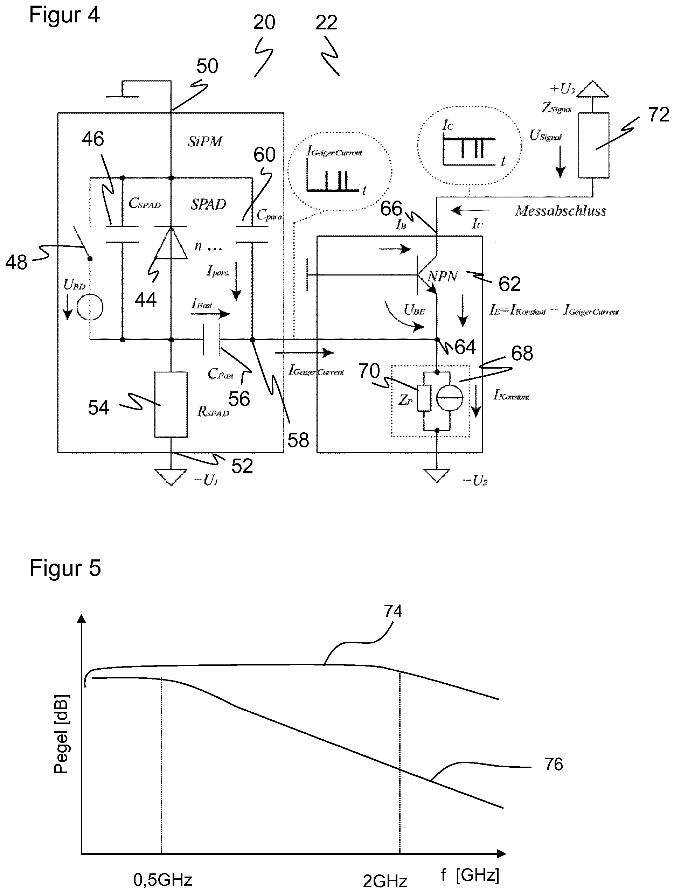

Wie einleitend schon erläutert, ist es für einen herkömmlichen Lichtempfänger ein Widerspruch, zugleich eine hohe Bandbreite und eine hohe Empfindlichkeit zur Verfügung zu stellen, weil eine hohe Bandbreite mit einer kleinen Empfangsfläche einhergeht. Dies kann durch den Einsatz eines SPAD-Lichtempfängers bei geeignetem Signalabgriff aufgelöst werden. Figur 4 zeigt ein Beispiel für eine SPAD-Zelle oder ein Lawinenphotodiodenelement 20 mit einer hochfrequenzgeeigneten Signalabgriffschaltung 22.

Die Anzahl an Lawinenphotodiodenelementen 20 variiert je nach Bauteil und Zielanforderungen und kann bis zu mehreren tausend und darüber hinaus betragen. Ein entsprechendes Bauelement kann beispielsweise in einem CMOS-Prozess hergestellt werden. Die Durchbruchspannung der Lawinenphotodiodenelemente ist deutlich geringer als bei herkömmlichen Lawinenphotodioden, beispielsweise von höchstens 50 V oder 30 V. Dabei können die Lawinenphotodiodenelemente 20 gruppenweise oder insgesamt elektrisch zusammengeschaltet sein. Dies ermöglicht statistische Verfahren, die ausgleichen, dass ein einzelnes Lawinenphotodiodenelement 20 im Geiger-Modus einerseits schon durch ein einziges Fremdlichtphoton fehlausgelöst werden kann und andererseits nach jedem Auslösen einige Zeit lang nicht aktivierbar ist. Die Darstellung der Figur 4 jeweils einer Signalabgriffschaltung 22 für ein einzelnes Lawinenphotodiodenelement 20 ist demnach nur ein Beispiel, eine Signalabgriffschaltung 22 kann auch für eine Gruppe oder alle Lawinenphotodiodenelemente 20 zuständig sein.

Der eigentliche Aufbau des Halbleiterbauteils wird als bekannt vorausgesetzt und nicht dargestellt. In dem Ersatzschaltbild der Figur 4 zeigt das Lawinenphotodiodenelement 20 zum einen das Verhalten einer Diode 44. Es hat außerdem eine Kapazität, die durch den parallel geschalteten Kondensator 46 repräsentiert wird. Ein Lawinendurchbruch wird durch mindestens ein auftreffendes Photon ausgelöst, wobei dieser Vorgang wie ein Schalter 48 wirkt. Im Bereitschaftszustand liegt über der Diode 44 mit Hilfe einer ersten Elektrode 50 und einer zweiten Elektrode 52 eine Spannung oberhalb der Durchbruchspannung. Erzeugt dann ein einfallendes Photon ein Ladungsträgerpaar, so schließt dies gleichsam den Schalter 48, so dass das Lawinenphotodiodenelement 20 mit Ladungsträgern geflutet wird und ein sogenannter Geigerstrom fließt. Neue Ladungsträger entstehen aber nur, solange das elektrische Feld stark genug bleibt. Wird der Kondensator 46 so weit entladen, dass die Durchbruchspannung unterschritten ist, so kommt die Lawine von selbst zum Erliegen ("passive quenching"). Danach wird der Kondensator 46 aus den Elektroden 50, 52 über einen Widerstand 54 wieder aufgeladen, bis wieder eine Spannung über der Durchbruchspannung an der Diode 44 anliegt. Es gibt alternative Ausgestaltungen, in denen die Lawine von außen erkannt und daraufhin eine Entladung unter die Durchbruchspannung ausgelöst wird ("active quenching").

Während der Lawine steigt das Ausgangssignal rapide und unabhängig von der Intensität des auslösenden Lichts auf einen Maximalwert an und fällt dann nach dem Löschen der Lawine wieder ab. Die Zeitkonstante des Abfalls, welche eine Totzeit des Lawinenphotodiodenelements 20 angibt, liegt typischerweise im Bereich einiger bis einiger zehn Nanosekunden. Die Totzeit ist keine absolute Totzeit, denn sobald die Vorspannung groß genug ist, um eine Lawine zu unterstützen, kann das Ausgangssignal auch wieder ansteigen, allerdings nicht im gleichen Maße wie aus dem Bereitschaftszustand. Der Verstärkungsfaktor beträgt bis zu $10^6$ und ergibt sich im Wesentlichen aus der maximalen Anzahl von Ladungsträgern, die von der Lawine in dem Lawinenphotodiodenelement 20 rekrutiert werden können.

Die Funktion der Signalabgriffschaltung 22 ist, aus dem Geigerstrom während eines Lawinendurchbruchs ein Messsignal möglichst unter Ausnutzung des vollen Stromflusses abzuleiten, und zwar so, dass auch hochfrequente Anteile erhalten bleiben und ein hohes Signal/Rausch-Verhältnis erreicht wird. Die Signalauskopplung erfolgt vorzugsweise kapazitiv über einen Koppelkondensator 56. In der dargestellten Ausführungsform weist das Lawinenphotodiodenelement 20 eine dritte Elektrode 58 zum Auslesen eines Messsignals aus, wobei diese dritte Elektrode 58 über den Koppelkondensator 56 verbunden ist. Das Auslesen über die dritte Elektrode 58 kann Vorteile haben, ist aber nicht zwingend. Alternativ wird über eine der anderen Elektroden 50, 52 ausgelesen, dann aber der Widerstand 54 über einen parallelen Kondensator hochfrequenzmäßig überbrückt.

Die weiteren, in Figur 4 nicht dargestellten Lawinenphotodiodenelemente bilden aus Sicht des gezeigten Lawinenphotodiodenelements 20 parasitäre Kapazitäten 60, die durch sonstige parasitäre Effekte noch erhöht sein können. Die parasitäre Kapazität 60 summiert sich aus den meist zahlreichen weiteren Lawinenphotodiodenelementen und kann deshalb deutlich größer sein als die Kapazität des zugehörigen Koppelkondensators 56. Die parasitäre Kapazität 60 verhält sich wie ein Tiefpass, der hochfrequente Signale sperrt.

Die Signalabgriffschaltung 22 soll für die Erzielung hoher Geschwindigkeiten beziehungsweise Bandbreiten einen möglichst kleinen, gleichzeitig für eine hohe Empfindlichkeit einen großen Signalwiderstand aufweisen. Um diesen widersprüchlichen Anforderungen gerecht zu werden, nutzt die Signalabgriffschaltung 22 eine aktive Schaltungslösung mit einem aktiven Kopplungselements 62, das in Figur 4 als bipolarer NPN-Transistor in Basisschaltung ausgebildet ist. Andere aktive Elemente, insbesondere andere Transistoren (FET), eine andere Polarität (PNP) oder eine andere Verschaltung (Emitterschaltung) sind denkbar. Außerdem können statt einer einstufigen Schaltung auch mehrere Transistoren eingesetzt werden.

Das aktive Kopplungselement 62 hat nun mehrere erhebliche Vorteile für den Signalabgriff. Zum einen bietet es für den kapazitiv als Strompuls ausgekoppelten Geigerstrom praktisch keinen Widerstand, bildet also einen virtuellen Kurzschluss. Das wird praktisch nicht ganz erreicht, aber weniger als ein Ohm ist durchaus möglich. Dies führt dazu, dass es über der parasitären Kapazität 60 trotz der Lawine keine relevanten Spannungsänderungen und damit dort keine Umladevorgänge und keinen Stromfluss gibt. Dem aktiven Kopplungselement 62 steht daher eingangsseitig nahezu der gesamte durch den Koppelkondensator 56 fließende Geigerstrom zur Verfügung. Ohne den virtuellen Kurzschluss würden dagegen deutlich spürbare Anteile des Geigerstroms in der parasitären Kapazität 60 verloren gehen, und vor allem die schnellen, hochfrequenten Signalanteile durch das Tiefpassverhalten unterdrückt.

Zum zweiten erzeugt das aktive Kopplungselement 62 ausgangsseitig einen Messstrom, der in seinem zeitlichen Verlauf und Pegel dem Geigerstrom entspricht. Dabei kann das aktive Kopplungselement 62 den Messstrom durch seine Übertragungsfunktion auch gegenüber dem Geigerstrom gezielt verändern, ihn insbesondere verstärken. Es steht dafür an dem Kopplungselement 62 nahezu der vollständige Strom des Lawinendurchbruchs zur Verfügung. Der Messstrom ist anschließend ausgangsseitig als Detektionsergebnis zur Weiterverarbeitung abgreifbar. Der Messstrom speist sich aus einer Stromquelle des aktiven Kopplungselements 62 und nicht aus dem Lawinenphotodiodenelement 20.

Dabei sind zum dritten Eingangskreis und Ausgangkreis voneinander entkoppelt. Die Weiterverarbeitung des Messstroms hat also, in den technischen Grenzen einer realen Entkopplung, keinerlei Auswirkungen auf den Geigerstrom. Deshalb sind praktisch beliebige Nachfolgestufen möglich, die anders als herkömmliche Signalabgriffe keine ungünstigen Rückwirkungen auf den Geigerstrom haben.

Im konkreten Beispiel der Figur 4 bildet der Emitter des aktiven Kopplungselements 62 den Eingang 64, dem von der dritten Elektrode 58 der Geigerstrom zugeführt wird. Die Basis ist mit Masse oder allgemeiner einem festen Potential verbunden und damit virtuell kurzgeschlossen. Der Kollektor bildet den Ausgang 66, an dem der Messstrom bereitgestellt wird. Im Emitterkreis des Transistors befindet sich noch eine Konstantstromquelle 68 zwischen Eingang 64 und einer Versorgungsspannung $-U_2$. Dadurch fließt hier zu Zeiten außerhalb von Lawinendurchbrüchen ein Gleichstrom, der den Arbeitspunkt des Transistors einstellt. Die Konstantstromquelle 68 kann alternativ passiv durch einen Widerstand 70 realisiert sein oder als Kombination aus beidem, wie in Figur 4 gezeigt. Am Ausgang 66 wird der Messstrom abgegriffen. Eine einfache Messimpedanz 72 ist nur ein Beispiel beliebiger Messschaltungen, die weitere aktive und/oder passive Elemente aufweisen können. Durch die Entkopplung mittels der Signalabgriffschaltung 22 haben diese Messschaltungen praktisch keine Rückwirkung auf die eigentliche Messung.

Figur 5 illustriert das Hochfrequenzverhalten der Signalabgriffschaltung gemäß Figur 4 als Ergebnis eines Testaufbaus, in dem ein Laser ein Signal auf den Lichtempfänger 18 strahlt, das in seiner Amplitude mit einer variierenden Frequenz von 100 kHz bis 3 GHz moduliert wird. Dabei entspricht der obere Verlauf 74 dem Ergebnis mit der Signalabgriffschaltung 22 und der untere Verlauf 76 zum Vergleich einem herkömmlichen Signalabgriff. Die Signalabgriffschaltung 22 zeigt einen sehr flachen Frequenzgang mit einer Bandbreite von 2 GHz und einem deutlichen Signalabfall erst jenseits von 2-3 GHz. Das ist gegenüber dem unteren Verlauf 76 eine Vervielfachung, wo das Messsignal schon bei moderaten Frequenzen lange vor dem GHz-Bereich einbricht.

**Patentansprüche**

1. Entfernungsmessender optoelektronischer Sensor (10) zur Erfassung und Abstandsbestimmung eines Objekts (16) in einem Überwachungsbereich (14) mit einem Lichtsender (12) zum Aussenden eines Lichtsignals, einem Lichtempfänger (18) zum Erzeugen eines Empfangssignals, der eine Vielzahl von Lawinenphotodiodenelemente (20) zur Erfassung von Empfangslicht aus dem Überwachungsbereich (14) aufweist, die jeweils mit einer Vorspannung oberhalb einer Durchbruchspannung vorgespannt und somit in einem Geiger-Modus betrieben sind, sowie mit einer Steuer- und Auswerteeinheit (24), die dafür ausgebildet ist, aus dem Empfangssignal eine Lichtlaufzeit und daraus den Abstand des Objekts (16) zu bestimmen,

**dadurch gekennzeichnet,**

**dass** der Sensor (10) einen Hochfrequenz-Transceiver (26) aufweist, der mit dem Lichtsender (12) und dem Lichtempfänger (18) verbunden ist, um dem ausgesandten Lichtsignal ein Hochfrequenzsignal aufzumodulieren und das Empfangssignal mit dem Hochfrequenzsignal zu demodulieren, und dass der für ein Modulationsverfahren der drahtlosen Datenkommunikation ausgebildete Hochfrequenz-Transceiver (26) ein modifizierter WLAN-Baustein ist, der zum gleichzeitigen Senden des Lichtsignals und Erfassen von Empfangslicht vollduplexfähig ist, oder ein Mobilfunkbaustein ist, dessen Sende- und Empfangsfrequenz im Abstandsmessbetrieb auf eine gleiche Frequenz gesetzt ist.

2. Sensor (10) nach Anspruch 1,
wobei das Hochfrequenzsignal eine Frequenz von mindestens 200 MHz, mindestens 500 MHz, mindestens 1 GHz oder mindestens 2 GHz aufweist.

3. Sensor (10) nach Anspruch 1 oder 2,
wobei die Steuer- und Auswertungseinheit (24) dafür ausgebildet ist, Empfangssignale mehrerer Lawinenphotodiodenelemente (20) und/oder Empfangssignale zu verschiedenen Zeiten statistisch auszuwerten.

4. Sensor (10) nach einem der vorhergehenden Ansprüche,
wobei die Steuer- und Auswertungseinheit (24) dafür ausgebildet ist, den Abstand in einem Phasenverfahren zu bestimmen, bei dem das Lichtsignal kontinuierlich ausgesandt und das Empfangssignal unter Erhaltung der Phase demoduliert wird.

5. Sensor (10) nach Anspruch 4,
wobei die Steuer- und Auswertungseinheit (24) dafür ausgebildet ist, den Abstand sequentiell mit mehreren verschiedenen Hochfrequenzen zu messen.

6. Sensor (10) nach Anspruch 4 oder 5,
wobei der Hochfrequenz-Transceiver (26) ein Signal in einem Basisband in die Hochfrequenz heraufmischt und das Empfangssignal in das Basisband herabmischt.

7. Sensor (10) nach einem der vorhergehenden Ansprüche,
wobei das Modulationsverfahren eine Quadraturamplitudenmodulation nutzt.

8. Sensor (10) nach einem der vorhergehenden Ansprüche,
wobei der Hochfrequenz-Transceiver (26) ein WLAN- oder ein Mobilfunk-Transceiver ist.

9. Sensor (10) nach einem der vorhergehenden Ansprüche,
wobei der Hochfrequenz-Transceiver (26) Teil mindestens eines integrierten Bausteins für die drahtlose Kommunikation ist.

10. Sensor (10) nach einem der vorhergehenden Ansprüche,
wobei der Hochfrequenz-Transceiver (26) einen Referenzkanal (38, 42) aufweist, um eine Abweichung der Phasenlage zu bestimmen.

11. Sensor (10) nach einem der vorhergehenden Ansprüche,
wobei in dem Hochfrequenz-Transceiver (26) eine Koexistenzstrategie implementiert ist, mit der ein Lichtsignal und ein Sensor (10) einander eindeutig zugeordnet werden.

12. Sensor (10) nach einem der vorhergehenden Ansprüche,
der eine Signalabgriffschaltung (22) zum Auslesen der Lawinenphotodiodenelemente (20) aufweist, wobei die Signalabgriffschaltung (22) ein aktives Kopplungselement (62) mit einem Eingang (64), der mit einem Lawinenphotodiodenelement (20) verbunden ist, und mit einem Ausgang (66) aufweist, wobei das Kopplungselement (62) einen Geigerstrom des Lawinenphotodiodenelements (20) am Eingang (64) auf einen in Verlauf und Pegel dem Geigerstrom entsprechenden Messstrom abbildet, indem der Eingang (64) für den Geigerstrom einen virtuellen Kurzschluss gegen ein Potential bildet und der Ausgang (66) von dem Eingang (64) entkoppelt ist.

**13.** Sensor (10) nach Anspruch 12,
wobei die Lawinenphotodiodenelemente (20) eine erste Elektrode (50) und eine zweite Elektrode (52) aufweisen, über die sie vorgespannt sind, und jeweils zwischen Lawinenphotodiodenelement (20, 44) und erster Elektrode (50) oder zweiter Elektrode (52) eine Ladeeinheit (54) angeordnet ist, wobei der Eingang (64) des Kopplungselements (62) mit einer dritten Elektrode (58) eines Lawinenphotodiodenelements (20) verbunden ist, die zwischen dem Lawinenphotodiodenelement (20, 44) und der Ladeeinheit (54) angeschlossen ist oder wobei die Ladeeinheit (54) mittels eines Kondensators wechselstrommäßig überbrückt ist.

**14.** Verfahren zur Erfassung und Abstandsbestimmung eines Objekts (16) in einem Überwachungsbereich (14), bei dem ein Lichtsignal ausgesandt und aus Empfangslicht in einem Lichtempfänger (18) ein Empfangssignal erzeugt wird, der eine Vielzahl von Lawinenphotodiodenelementen (20) zur Erfassung von Empfangslicht aus dem Überwachungsbereich (14) aufweist, die jeweils mit einer Vorspannung oberhalb einer Durchbruchspannung vorgespannt und somit in einem Geiger-Modus betrieben sind, wobei aus dem Empfangssignal eine Lichtlaufzeit und daraus der Abstand des Objekts (16) bestimmt wird,
**dadurch gekennzeichnet,**
**dass** dem ausgesandten Lichtsignal in einem Hochfrequenz-Transceiver (26) ein Hochfrequenzsignal aufmoduliert und das Empfangssignal mit dem Hochfrequenzsignal demoduliert wird und dass der Hochfrequenz-Transceiver (26) ein modifizierter WLAN-Baustein ist, der zum gleichzeitigen Senden des Lichtsignals und Erfassen von Empfangslicht vollduplexfähig ist, oder ein Mobilfunkbaustein ist, dessen Sende- und Empfangsfrequenz im Abstandsmessbetrieb auf eine gleiche Frequenz gesetzt ist, und ein Modulationsverfahren der drahtlosen Datenkommunikation verwendet.

**Claims**

**1.** A distance-measuring optoelectronic sensor (10) for detecting and determining the distance of an object (16) in a monitoring region (14), the sensor (10) having a light transmitter (12) for transmitting a light signal, a light receiver (18) for generating a reception signal, the light receiver (18) having a plurality of avalanche photodiode elements (20) for detecting reception light from the monitoring region (14), which are each biased with a bias voltage above a breakdown voltage and are thus operated in a Geiger mode, and having a control and evaluation unit (24) which is configured to determine a light time of flight from the reception signal and therefrom the distance of the object (16), **characterized in that** the sensor (10) has a high-frequency transceiver (26) which is connected to the light transmitter (12) and the light receiver (18) in order to modulate a high-frequency signal onto the transmitted light signal and to demodulate the received signal with the high-frequency signal, and **in that** the high-frequency transceiver (26) configured for a modulation method of wireless data communication is a modified WLAN module which is fully duplexable for simultaneous transmission of the light signal and detection of received light, or is a mobile radio module whose transmission frequency and reception frequency are set to the same frequency in distance measurement mode.

**2.** The sensor (10) according to claim 1,
wherein the high-frequency signal has a frequency of at least 200 MHz, at least 500 MHz, at least 1 GHz or at least 2 GHz.

**3.** The sensor (10) according to claim 1 or 2,
wherein the control and evaluation unit (24) is configured for statistically evaluating received signals of a plurality of avalanche photodiode elements (20) and/or received signals for different times.

**4.** The sensor (10) according to one of the preceding claims,
wherein the control and evaluation unit (24) is configured to determine the distance in a phase method in which the light signal is transmitted continuously and the received signal is demodulated while preserving the phase.

**5.** The sensor (10) according to claim 4,
wherein the control and evaluation unit (24) is configured to measure the distance sequentially at a plurality of different high frequencies.

**6.** The sensor (10) according to claim 4 or 5,
wherein the high-frequency transceiver (26) mixes up a signal in a baseband into the high frequency and mixes down the received signal into the baseband.

**7.** The sensor (10) according to one of the preceding claims,
wherein the modulation method uses quadrature amplitude modulation.

**8.** The sensor (10) according to one of the preceding claims,
wherein the high-frequency transceiver (26) is a WLAN module or a mobile radio transceiver.

**9.** The sensor (10) according to one of the preceding claims,
wherein the high-frequency transceiver (26) is part of at least one integrated device for wireless communication.

**10.** The sensor (10) according to one of the preceding claims,
wherein the high-frequency transceiver (26) has a reference channel (38, 42) for determining a phase offset.

**11.** The sensor (10) according to one of the preceding claims,
wherein a coexistence strategy for uniquely assigning a light signal and a sensor (10) to one another is implemented in the high-frequency transceiver (26).

**12.** The sensor (10) according to one of the preceding claims,
comprising a signal tap circuit (22) for reading out the avalanche photodiode elements (20), the signal tap circuit (22) comprising an active coupling element (62) having an input (64) connected to an avalanche photodiode element (20) and an output (66), wherein the coupling element (62) maps a Geiger current of the avalanche photodiode element (20) at the input (64) to a measuring current corresponding to the Geiger current in course and level in that the input (64) for the Geiger current forms a virtual short circuit against a potential and the output (66) is decoupled from the input (64).

**13.** The sensor (10) according to claim 12,
wherein the avalanche photodiode elements (20) comprise a first electrode (50) and a second electrode (52) for biasing and a charging unit (54) being arranged between the avalanche photodiode element (20, 44) and the first electrode (50) or the second electrode (52), wherein the input (64) of the coupling element (62) is connected to a third electrode (58) of an avalanche photodiode element (20) which is connected between the avalanche photodiode element (20, 44) and the charging unit (54), or wherein the charging unit (54) is bypassed for alternating current by means of a capacitor.

**14.** A method for detecting and determining the distance of an object (16) in a monitoring region (14), wherein a light signal is transmitted and a reception signal is generated from received light in a light receiver (18), the light receiver (18) having a plurality of avalanche photodiode elements (20) for detecting received light from the monitoring region (14), which are each biased with a bias voltage above a breakdown voltage and are thus operated in a Geiger mode, wherein a light time of flight is determined from the reception signal and the distance of the object (16) is determined therefrom,
**characterized in that** a high-frequency signal is modulated onto the transmitted light signal in a high-frequency transceiver (26) and the received signal is demodulated with the high-frequency signal, and **in that** the high-frequency transceiver (26) is a modified WLAN module which is fully duplexable for simultaneous transmission of the light signal and detection of received light, or is a mobile radio module whose transmission frequency and reception frequency are set to the same frequency in distance measurement mode, and uses a modulation method of wireless data communication.

**Revendications**

**1.** Capteur télémétrique optoélectronique (10) pour détecter et déterminer la distance d'un objet (16) dans une zone à surveiller (14), comportant un émetteur de lumière (12) destiné à émettre un signal lumineux, un récepteur de lumière (18) destiné à générer un signal de réception et présentent une multitude d'éléments formant photodiodes à avalanche (20) destinés à détecter une lumière de réception depuis la zone à surveiller (14), qui sont chacun polarisés chacun avec une tension de polarisation supérieure à une tension de claquage et qui fonctionnent donc en mode Geiger, et comportant une unité de commande et d'évaluation (24) qui est réalisée pour déterminer à partir du signal de réception un temps de parcours de lumière et à partir de celui-ci la distance de l'objet (16),
**caractérisé en ce que**
le capteur (10) comprend un émetteur-récepteur haute fréquence (26) qui est connecté à l'émetteur de lumière (12) et au récepteur de lumière (18) pour moduler un signal haute fréquence sur le signal lumineux émis et pour démoduler le signal de réception avec le signal haute fréquence, et **en ce que** l'émetteur-récepteur haute fréquence (26) réalisé pour une méthode de modulation de la communication de données sans fil est un composant WLAN modifié qui, en vue d'une émission du signal lumineux simultanément avec la détection de la lumière de réception, est capable de fonctionner en mode duplex intégral, ou bien il est un composant de téléphonie mobile dont la fréquence d'émission et de réception est mise à une même fréquence pendant le fonctionnement de mesure de distance.

2. Capteur (10) selon la revendication 1,
dans lequel le signal haute fréquence présente une fréquence d'au moins 200 MHz, d'au moins 500 MHz, d'au moins 1 GHz ou d'au moins 2 GHz.

3. Capteur (10) selon la revendication 1 ou 2,
dans lequel l'unité de commande et d'évaluation (24) est réalisée pour évaluer statistiquement des signaux de réception de plusieurs éléments formant photodiodes à avalanche (20) et/ou pour évaluer statistiquement plusieurs signaux de réception à des instants différents.

4. Capteur (10) selon l'une des revendications précédentes,
dans lequel l'unité de commande et d'évaluation (24) est réalisée pour déterminer la distance dans une méthode de phase dans laquelle le signal lumineux est émis en continu et le signal de réception est démodulé tout en préservant la phase.

5. Capteur (10) selon la revendication 4,
dans lequel l'unité de commande et d'évaluation (24) est réalisée pour mesurer la distance séquentiellement à plusieurs hautes fréquences différentes.

6. Capteur (10) selon la revendication 4 ou 5,
dans lequel l'émetteur-récepteur haute fréquence (26) mélange un signal dans une bande de base vers le haut jusqu'à la haute fréquence et il mélange le signal de réception vers le bas jusque dans la bande de base.

7. Capteur (10) selon l'une des revendications précédentes,
dans lequel la méthode de modulation utilise une modulation d'amplitude en quadrature.

8. Capteur (10) selon l'une des revendications précédentes,
dans lequel l'émetteur-récepteur haute fréquence (26) est un émetteur-récepteur WLAN ou de téléphonie mobile.

9. Capteur (10) selon l'une des revendications précédentes,
dans lequel l'émetteur-récepteur haute fréquence (26) fait partie d'au moins un composant intégré pour la communication sans fil.

10. Capteur (10) selon l'une des revendications précédentes,
dans lequel l'émetteur-récepteur haute fréquence (26) présente un canal de référence (38, 42) pour déterminer un écart de la position de phase.

11. Capteur (10) selon l'une des revendications précédentes,
dans lequel une stratégie de coexistence est implémentée dans l'émetteur-récepteur haute fréquence (26), qui permet d'associer de façon univoque un signal lumineux et un capteur (10) l'un à l'autre.

12. Capteur (10) selon l'une des revendications précédentes,
comprenant un circuit de prise de signal (22) pour lire les éléments formant photodiodes à avalanche (20), le circuit de prise de signal (22) comprenant un élément de couplage (62) actif pourvu d'une entrée (64) connectée à un élément formant photodiode à avalanche (20) et d'une sortie (66), l'élément de couplage (62) représentant à l'entrée (64) un courant Geiger de l'élément formant photodiode à avalanche (20) sur un courant de mesure qui, quant à l'évolution et au niveau, correspond au courant Geiger du fait que l'entrée (64) pour le courant Geiger forme un court-circuit virtuel vers un potentiel, et la sortie (66) est découplée de l'entrée (64).

13. Capteur (10) selon la revendication 12,
dans lequel les éléments formant photodiodes à avalanche (20) présentent une première électrode (50) et une seconde électrode (52) par lesquelles ils sont polarisés, et une unité de charge (54) respective est agencée entre l'élément formant photodiode à avalanche (20, 44) et la première électrode (50) ou la seconde électrode (52), l'entrée (64) de l'élément de couplage (62) est connectée à une troisième électrode (58) d'un élément formant photodiode à avalanche (20), qui est branchée entre l'élément formant photodiode à avalanche (20, 44) et l'unité de charge (54), ou l'unité de charge (54) est pontée quant au courant alternatif par un condensateur.

14. Procédé pour détecter et déterminer la distance d'un objet (16) dans une zone à surveiller (14), dans lequel un signal lumineux est émis et un signal de réception est généré à partir de la lumière de réception dans un récepteur de lumière (18) qui comprend une multitude d'éléments formant photodiodes à avalanche (20) destinés à détecter une lumière de réception depuis la zone à surveiller (14), qui sont chacun polarisés chacun avec une tension de polarisation supérieure à une tension de claquage et qui fonctionnent donc en mode Geiger, et un temps de parcours de lumière est déterminé à partir du signal de réception et la distance de l'objet (16) est déterminée à partir de celui-ci, **caractérisé en ce que**
dans un émetteur-récepteur haute fréquence (26), un signal haute fréquence est modulé sur le signal lumineux émis, et le signal de réception est démodulé avec le signal haute fréquence, et **en ce que** l'émetteur-récepteur haute fréquence (26) est un composant WLAN modifié qui, en vue d'une émission du signal lumineux simultanément avec la détection de la lumière de réception, est capable de fonctionner en mode duplex intégral, ou bien il est un composant de téléphonie mobile dont la fréquence d'émission et de réception est mise à une même fréquence pendant le fonctionnement de mesure de distance et qui utilise une méthode de modulation de la communication de données sans fil.

## Figur 1

## Figur 2

## Figur 3

## Figur 4

## Figur 5

**EP 3 267 226 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- US 20090245788 A1
- US 20070182949 A1
- US 20060202129 A1

**In der Beschreibung aufgeführte Nicht-Patentliteratur**

- **DAVID SU et al.** A 5 GHz CMOS Transceiver for IEEE 802.11a Wireless LAN. *IEEE International Solid-State Circuits Conference / Sessions 5 / Wireless Networking Transceivers /5.4,* 2002
- **SHCHERBAKOVA, OLGA et al.** Linear-mode gain-modulated avalanche photodiode image sensor for time-of-flight optical ranging. *IEEE Transactions on Electron Devices,* 2016, vol. 63.1, 145-152